# EUROPÄISCHE PATENTANMELDUNG

(11) **EP 1 070 942 A1**
(43) Veröffentlichungstag der Anmeldung: **24.01.2001**
(21) Anmeldenummer: 00810572.8
(22) Anmeldetag: 30.06.2000
(51) Int. Cl.: G01G 19/07, G01G 19/02, G01G 3/14

(54) **Verkehrsüberwachungsanlage**

(30) Priorität: 21.07.1999 CH 133199
(71) Anmelder: K.K. HOLDING AG, CH-8408 Winterthur (CH)
(72) Erfinder: Vollenweider, Kurt, CH-8457 Humlikon (CH); Calderara, Reto, CH-8312 Winterberg (CH); Helg, Christian, CH-9604 Lütisburg (CH); Sonderegger, Hans Conrad, CH-8413 Neftenbach (CH)

(57) **Zusammenfassung**

Zur Erfassung von mit Unter- oder Überdruck beaufschlagten Fahrzeugpneus und/oder von zu hohen Flächenpressungen überladener Fahrzeuge auf die Fahrbahn ist mindestens eine sehr genaue Messung der Aufstands- oder Latchbreite (b) eines Pneus (6,7) erforderlich.

Eine solche lässt sich mit einem sogenannten Latchbreite-Sensor (2,3) gewinnen. Dieser hat einen quer zur Fahrbahn (1) verlegten Messstreifen (12,13), der eine auf seine ganze Länge gleichmässig verteilte Messgrösse, z.B. einen ohmschen Widerstand, mit einem bekannten spezifischen Wert pro Längeneinheit, z,B. Ω/mm, aufweist.

Parallel zum Messstreifen (12,13) ist ein elastisch verformbares Element (14) angeordnet, das bei einer Druckbelastung durch ein darüber rollendes Fahrzeug einen Teil der Messgrösse kurzschliesst und so deren Wert verändert.

## Beschreibung

Die Erfindung betrifft eine Verkehrsüberwachungsanlage gemäss Oberbegriff von Anspruch 1.

Bekanntlich verursachen überlastete Fahrzeuge mit zu hohen Flächenpressungen erhebliche Zerstörungen der Fahrbahnen, insbesondere auf Express-Strassen. Weiterhin stellen Fahrzeugpneus mit Unterdruck eine grosse Verkehrsgefährdung dar. Es besteht daher die Notwendigkeit, diese beiden wichtigsten Problemkategorien aus dem rollenden Verkehr zu eliminieren.

Für die Erfassung des Pneudruckes und/oder der Flächenpressung ist es erforderlich, die Aufstandsfläche eines Pneus auf der Fahrbahn zu ermitteln. Aus der EP-A-0892.259 ist daher eine Aufnehmeranordnung zum Einbau in Fahrbahnen bekannt, durch die die Pneudrücke eines rollenden Fahrzeuges gemessen werden. Die Praxis hat nun gezeigt, dass mit dieser Anordnung die Pneudrücke nicht in allen Fällen mit der notwendigen Genauigkeit erfasst werden können, wobei insbesondere die Breite der Aufstands- oder Latchfläche sehr häufig nicht genau genug gemessen werden kann.

Es ist daher die Aufgabe der Erfindung, eine Anordnung zu schaffen, mit der in erster Linie die Latchbreite sehr genau ermittelt werden kann. Erfindungsgemäss wird diese Aufgabe mit den Merkmalen von Anspruch 1 gelöst.

Im einfachsten Fall ist die Messgrösse ein ohmscher Widerstand, der über die ganze Länge des Sensors für die Latchbreite einen konstanten spezifischen Widerstand pro Längeneinheit, z.B. pro Millimeter (mm), aufweist. Durch den Druck eines darüber rollenden Fahrzeuges schliesst eine Kontaktmembrane einen Teil dieses Widerstandes kurz, wobei aus der Widerstandsänderung bei konstantem Strom die Latchbreite sehr genau bestimmt werden kann. Misst man darüber hinaus beispielsweise die Spannung zwischen Anfang oder Ende des Messstreifens einerseits und der Kontaktmembrane andererseits, so lässt sich daraus gleichzeitig die Position, d.h. der Abstand, des kurzgeschlossenen Bereiches von Anfang oder Ende des Messstreifens bestimmen. Es ist jedoch auch möglich für jede der beiden Grössen, Latchbreite und Latchposition, einen eigenen Messstreifen in einem Sensor vorzusehen.

Weiterhin kann aus der Temperaturabhängigkeit eines ohmschen Widerstandes auf die Oberflächentemperatur der Fahrbahn geschlossen werden, was bei der Gefahr von Eisglätte sehr vorteilhaft ist. Ein ohmscher Widerstand ist nicht die einzige Möglichkeit für eine Verwendung als Messgrösse. Diese kann zum Beispiel auch in einer Kapazität oder einer Induktivität bestehen oder durch eine faseroptische Anordnung ermittelt werden.

Für die Erfassung des Pneudruckes reicht eine genaue Kenntnis der Latchbreite aus. Jedoch muss zusätzlich die Latchlänge in Fahrtrichtung bekannt sein, um die Aufstandsfläche eines Pneus errechnen zu können. Die Latchlänge lässt sich leicht bestimmen, wenn die Fahrzeuggeschwindigkeit bekannt ist, wofür in Fahrtrichtung vor dem Latchbreite-Sensor in bekannter Entfernung ein Trigger-Sensor vorgelagert sein kann.

Die Flächenpressung eines Fahrzeugrades errechnet sich aus der Aufstandsfläche und der Gesamtauflagekraft eines Rades. Für deren Erfassung kann ein Latchbreite-Sensor in einen WIM-Sensor integriert sein, beispielsweise in einen solchen nach dem EP-B-654.654 oder dem US Patent 5,461,924. Er kann aber auch direkt neben dem WIM-Sensor in derselben Montagenut eingebaut sein.

Eine Steigerung der Genauigkeit bei der Erfassung des Pneudruckes lässt sich erreichen, wenn zusätzlich in Fahrtrichtung nach dem WIM-Sensor in bekannter Distanz ein Deformations-WIM-Sensor angeordnet ist. Mit Hilfe der Laufzeit zwischen beiden WIM-Sensoren einer solchen Anordnung lässt sich gegebenenfalls die Geschwindigkeit des Fahrzeuges feststellen, so dass dann ein Trigger-Sensor unter Umständen entbehrlich ist. Deformations-WIM-Sensoren, bei denen der Pneu über eine Erhöhung oder eine Vertiefung rollt, sind zur Messung der Deformationskraft, aus der der Pneudruck bestimmt wird, seit langem bekannt, z. Beispiel aus den US Patenten 3,715,720; 2,313,156 oder 5,753,810. Mit dem ersten WIM-Sensor wird bei der neuen Überwachungsanlage die Gesamtkraft G definiert und klassiert, mit dem folgenden Deformations-WIM-Sensor wird Pneutyp und Druckkategorie erfasst. Aus den Kraft-Verhältnissen kann der Luftdruck im Pneu mit grosser Genauigkeit definiert und angezeigt werden. Diese Anordnung eignet sich besonders für Servicestationen.

Die Erfindung soll nun anhand von 7 Figuren näher beschrieben werden.

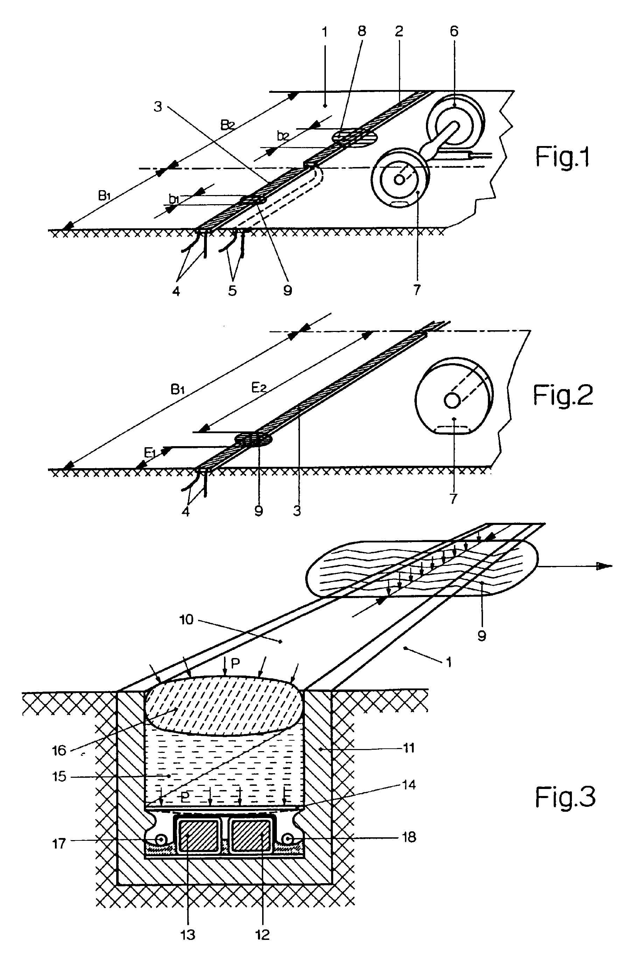

Fig. 1 zeigt eine Fahrbahnoberfläche 1, auf welcher zwei Latchbreite-Sensoren 2,3, jeder für eine Fahrzeughälfte, ausgelegt sind. Diese Sensoren sind als aufrollbare Bänder konzipiert, die auf die Fahrbahnoberfläche 1 geklebt werden. Jeder Sensor hat separate elektrische Anschlüsse 4,5, damit "Links" und "Rechts" unterschieden werden können. 6 ist ein Fahrzeugrad mit zu niedrigem Pneudruck. 7 ist das rechte Hinterrad mit normalem Pneudruck. Die Latchbreite b₂ der Latchfläche 8 wurde von Rad 6 erzeugt. Die Latchfläche 9 mit Latchbreite b₁ von Rad 7.

Zur Messung der Latchbreite stehen, wie beschrieben, verschiedene Messmethoden zur Verfügung wie kapazitive, induktive, ohmsche oder faseroptische. Die gezeigten Beispiele basieren auf der ohmschen Messtechnik. Die Erfindung ist aber ausdrücklich nicht an die verwendete Messtechnik gebunden.

Die Latchbreite-Sensoren 2,3 bestehen aus eng angelegten Widerstandswicklungen, z.B. auf einem Isolierband aufgedruckt, die von einer Metallfolie mit Isolierzwischenlage abgedeckt sind. Durch die hohe Flächenpressung des überrollenden Pneus bewirkt dessen Abdruckbreite ein Kurzschliessen der Widerstandswicklung auf der gepressten Breite, worauf durch Widerstandsmessung an den Anschlüssen 4,5 direkt die Latchbreiten b₁ und b₂ messbar sind.

Fig. 2 zeigt dieselbe Anordnung wie Fig 1, wobei der als Messband aufgeklebte Latchbreite-Sensor 3 so geschaltet ist, dass anstelle der Latchbreite b die Distanzen E₁ und E₂ von den Enden des Sensors verfügbar werden, wie ebenfalls bereits beschrieben.

Fig. 3 zeigt ein Ausführungsbeispiel eines Latchbreite-Sensors, der in einer Metallschiene 11 eingebaut und direkt in die Fahrbahnoberfläche 1 montiert ist. Es ist dies eine stationäre Ausführung, im Gegensatz zum temporär einsetzbaren und aufklebbaren Bandsensor der Fig 1 und Fig. 2. Am Grund der Schiene 11 sind zwei gewickelte Widerstandselemente 12, 13 isolierend aufgeklebt und mit Signalrückleitungen 17, 18 verbunden. Bei Überfahrt bewirkt der Pneu Kompression des Plastikkissens 15 über die Hartplastik 16, so dass die Kontaktmembrane 14, die als Metallfolie federnd mit Abstand von den Messelementen 12, 13 gehaltert ist, durchgebogen wird und einen Teil der Widerstandswicklungen kurzschliesst. Die Kurzschlusslänge entspricht genau der Latchbreite b. Durch Anordnung der beiden Latchmesselemente 12, 13 nebeneinander, werden sowohl die Latchbreite b wie auch die Distanzen E der Latchfläche von den Enden gemessen, sodass die Lage des Fahrzeugs auf der Fahrbahn genau definiert ist.

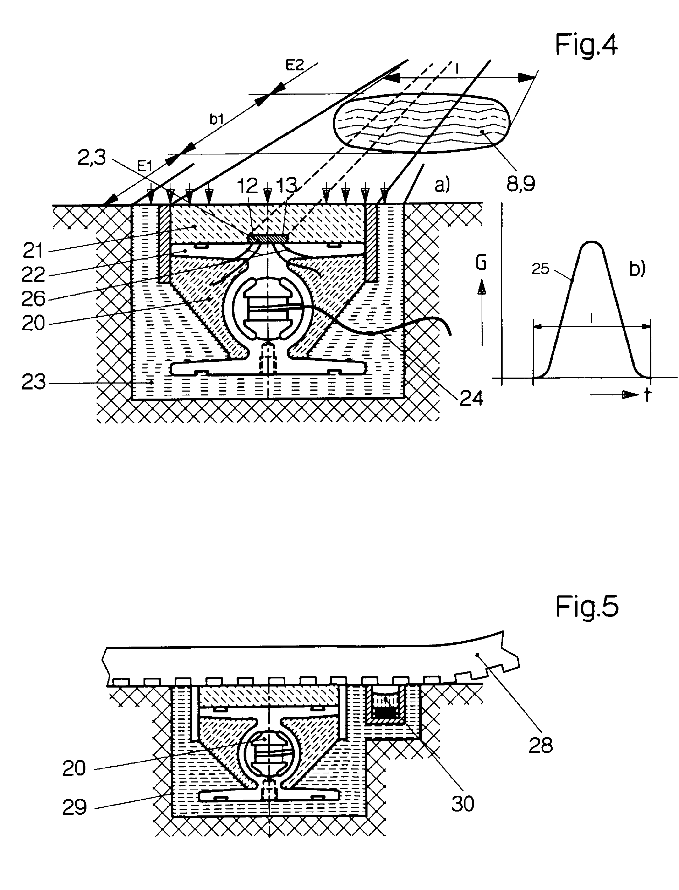

In Fig. 4 ist eine erste erfindungsgemässe Kombination des Latchbreite-Sensors mit einem handelsüblichen WIM-Sensor dargestellt. Als Beispiel ist hier das Eigenprodukt des Patentanmelders, das LINEAS als Handelsname erhalten hat, dargestellt. Eine ähnliche Kombination ist jedoch auch mit anderen handelsüblichen WIM-Sensoren denkbar. Die technischen Details des WIM-Sensors sind in den Patentschriften EP 0654 654 B1 und US 5.461.924 enthalten. Die Kombination eines Latchbreite- und eines WIM-Sensors zum Latch-WIM-Sensor ermöglicht neue Anwendungsbereiche, die bisher nicht vorstellbar waren.

Fig. 4a) zeigt den handelsüblichen WIM-Sensor 20, in dessen Epoxy-Sandaufguss 21 der Doppel-Latchbreite-Sensor 2,3 nach Fig. 1 als dünnes Band eingegossen ist und zwar über die ganze Länge des WIM-Sensors 20, z.B. auf dem Metallprofil 22. Der WIM-Sensor ist mit der Eingussmasse 23 in der Fahrbahnoberfläche 1 montiert. Die Signalleitungen 26 werden an einem Ende des Sensors zusammen mit dem Kraftmesssignal 24 abgeleitet. Bei Überfahrt steht nun nach Fig. 4 b) der Kraftverlauf der Auflagekraft 25 über der Zeit zur Verfügung, wodurch die Latchlänge ℓ aus der separat gemessenen Geschwindigkeit v des Fahrzeuges einfach berechnet wird. Gleichzeitig mit der Latch-Position E und der Breite der Latchfläche b ist somit die Gesamt-Latchfläche bestimmbar wie auch die Gesamtkraft aus der Integration der Auflagekraftkurve 25. Damit ist der mittlere spezifische Flächendruck der Latchfläche bekannt, was eine sehr wichtige Vergleichsgrösse zur Beurteilung des Fahrbahn-Zerstörungsfaktors ist.

Fig. 5 ist eine Variante der Sensor-Kombination nach Fig. 4. Auch diese Anordnung besteht wiederum aus einem WIM-Sensor 20 und einem Latchbreite-Sensor 30. In Fig. 5 entspricht dieser der in Fig. 3 gezeigten Konstruktion. Er ist in Fahrtrichtung am Ende des WIM-Sensors 20 angesetzt. Weiterhin ist der über die Sensoren rollende Pneu angedeutet und mit 28 bezeichnet. Beide Sensoren sind in derselben Montagenut 29 angeordnet.

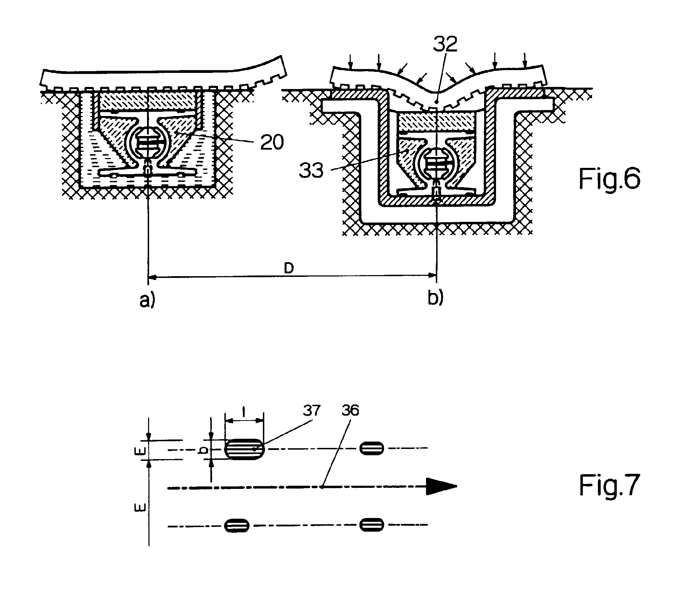

In Fig. 6 ist eine Spezial-Anordnung zur genaueren Messung des Pneudrucks, z.B. in Servicestationen, gezeigt. Sie besteht aus einer Kombination zweier WIM-Sensoren 20 und 33, die in einem bekannten Abstand D in Fahrtrichtung hintereinander angeordnet sind. Auf dem ersten Sensor 20 erfolgt beim Überrollen eine normale Pneuauflage 28, während durch den zweiten Sensor 33, der als WIM-Deformations-Sensor ausgebildet ist, eine positive Deformation 32 der Pneuwand erzeugt wird, wofür der Sensor 33 versenkt angeordnet ist. Um einen zusätzlichen Messparameter zu erhalten und damit die Genauigkeit des ermittelten Pneudrucks weiter zu erhöhen, kann der Norm-WIM-Sensor 20 mit einem Latchbreite-Sensor 2,3, ausgerüstet sein, wie in Fig. 4a gezeigt ist.

Fig. 7 zeigt als Beispiel eine Darstellungsmöglichkeit 36 der Pneudruck-Messanlage nach Fig. 5, wo die Latchflächen 35 der Normaldruck-Pneus mit jener 37 des Niederdruck-Pneus verglichen sind.

Die Erfindung stellt somit neue Sensortypen für die Verkehrsüberwachung und Pneudruckmessung vor:
Den Latchbreite- und den Latch-Positions-Sensor,
den Latch-Oberflächen-Temperatur-Sensor
sowie deren Kombination mit einem WIM-Sensor:
Den Latch-WIM-Sensor, Latch-Temperatur-WIM-Sensor.
Damit stehen wirksame neue Sensormittel zur Verfügung, die zur besseren und zuverlässigeren Führung der immer dichter belegten Verkehrsstränge beitragen und die Leistungen der Servicestationen verbessern werden.

### Referenzliste

- Fig. 1: 1 Fahrbahnoberfläche
- Fig. 2: 2 Latchbreite-Sensor, linke Seite
3 Latchbreite-Sensor, rechte Seite
4 Anschlüsse Sensor 3
5 Anschlüsse Sensor 2
6 Fahrzeugrad mit Niederdruck
7 Fahrzeugrad mit Normaldruck
8 Latchfläche Niederdruck
9 Latchfläche Normaldruck
   E₁ E₂ Distanzen der Latchfläche von den Enden
   b₁,b₂ Latchbreiten
- Fig. 3: 10 DruckflächeLatchbreite-Sensor
11 Metallschiene
12 Latch-Messelement für b
13 Latch-Messelement für E
14 Kontaktmembrane
15 Plastikkissen
16 Hartplastik Kraft-Einleitung
17, 18 Signal-Rückleitungen
- Fig. 4a): 20 WIM-Sensor
21 Epoxy-Sandaufguss
22 Metallprofil
23 Eingussmasse
24 Kraft-Messsignalleitung
26 Latch-Messsignalleitungen
- Fig. 4b): 25 Auflagekraft-Zeit Verlaufskurve (Überfahr Diagramm)
G Auflagekraft
t Zeit
l Latchlänge
27 Spitzenwert von 25
- Fig. 5: 28 Pneuwand
29 Montagenut
30 Latchbreite-Sensor
- Fig. 6a): 20 Normaler WIM-Sensor
- Fig. 6b): 32 Positiv deformierte Pneuwand
33 Versenkt angeordneter WIM-Sensor als Deformations-WIM-Sensor
- Fig. 7: 35 Normaldruck-Latch
36 Pkw Latchbilder
37 typischer Niederdruck Latch

## Patentansprüche

1. Verkehrsüberwachungs-Anlage gekennzeichnet durch einen Sensor (2,3) zur Messung der Aufstands (Latch)-Breite (b) eines darüberrollenden Fahrzeugpneus, aus der mindestens der Pneudruck eines Fahrzeugrades berechnet wird, welcher Sensor (2,3) mindestens einen mindestens über einen Teil der Fahrbahn quer verlegten Messstreifen (12,13) und ein im Abstand zu dem Messstreifen (12,13) parallel verlaufendendes, elastisches Element (14) enthält, wobei der Messstreifen (12,13) eine gleichmässig über seine Länge kontinuierlich verteilte Messgrösse mit bekanntem spezifischen Wert pro Längeneinheit aufweist, und das elastische Element (14) bei einer Druckbelastung durch einen darüber rollenden Fahrzeugpneu (6,7) den Teil der Messgrösse unter der Latchbreite (b) und damit den Messgrössen-Gesamtwert verändert.

2. Verkehrsüberwachungs-Anlage nach Anspruch 1, dadurch gekennzeichnet, dass der Sensor (2,3) sowohl die Latchbreite (b) als auch die Distanzen (E₁; E₂) der Latchfläche von den Enden des Messstreifens (12,13) erfassen kann.

3. Anlage nach Anspruch 1 oder 2, dadurch gekennzeichnet, dass die Messgrösse ein ohmscher Widerstand und als Element (14) eine Kontaktmembrane sind.

4. Anlage nach Anspruch 3, dadurch gekennzeichnet, dass die Temperaturabhängigkeit des Widerstandes zur Erfassung der Fahrbahnoberflächentemperatur dient.

5. Anlage nach Anspruch 1 oder 2, dadurch gekennzeichnet, dass die Messgrösse eine Kapazität ist.

6. Anlage nach Anspruch 1 oder 2, dadurch gekennzeichnet, dass die Messgrösse eine Induktivität ist.

7. Anlage nach Anspruch 1 oder 2, dadurch gekennzeichnet, dass der Messstreifen eine optische Faser ist.

8. Anlage nach einem der vorhergehenden Ansprüche, dadurch gekennzeichnet, dass zwei Messstreifen (12,13) nebeneinander in einem Latchbreite-Sensor angeordnet sind.

9. Anlage nach einem der vorhergehenden Ansprüche, dadurch gekennzeichnet, dass in Fahrtrichtung vor dem Latchbreite-Sensor (2,3) in bekannter Entfernung ein Trigger-Sensor vorgelagert ist, so dass aus der Geschwindigkeit die Latchlänge (ℓ) berechnet werden kann.

10. Anlage zur Kontrolle des Pneudrucks des fahrenden Fahrzeugs nach einem der vorhergehenden Ansprüche, dadurch gekennzeichnet, dass der Latchbreite-Sensor (2,3) in einen WIM-Sensor (20) integriert ist.

11. Anlage nach einem der Ansprüche 9 und 10, dadurch gekennzeichnet, dass in Fahrtrichtung nach dem WIM-Sensor (20) in bekannter Entfernung ein Deformations WIM-Sensor (33) angeordnet ist.

12. Anlage zur Kontrolle des Pneudrucks des fahrenden Fahrzeugs, dadurch gekennzeichnet, dass der Latchbreite-Sensor (30) neben dem WIM Sensor (20) in derselben Montagenut (29) angeordnet ist.

13. Algorithmus zur Berechnung des Pneudrucks des fahrenden Fahrzeugs, dadurch gekennzeichnet, dass der Spitzenwert (27) des Überfahrdiagramms (25) und die Latchbreiten (b₁,b₂) als Basis dienen.
